# EUROPÄISCHE PATENTSCHRIFT

(11) **EP 3 402 722 B1**
(45) Veröffentlichungstag und Bekanntmachung des Hinweises auf die Patenterteilung: **16.10.2019**
(21) Anmeldenummer: 16809377.1
(22) Anmeldetag: 09.12.2016
(51) Int. Cl.: B65B 57/14, B65G 47/82, B65B 59/02, B65G 43/08, B65G 47/68, B65G 47/88

(54) **BEHÄLTERBEHANDLUNGSANLAGE UND VERFAHREN ZUM UMSTELLEN DES BETRIEBS EINER BEHÄLTERBEHANDLUNGSANLAGE**
CONTAINER TREATMENT SYSTEM AND METHOD FOR SWITCHING THE OPERATION OF A CONTAINER TREATMENT SYSTEM
SYSTÈME DE TRAITEMENT DE RÉCIPIENTS ET PROCÉDÉ DE CHANGEMENT DU FONCTIONNEMENT D'UN SYSTÈME DE TRAITEMENT DE RÉCIPIENTS

(30) Priorität: 13.01.2016 DE 102016200281
(43) Veröffentlichungstag der Anmeldung: 21.11.2018
(73) Patentinhaber: Krones AG, 93073 Neutraubling (DE)
(72) Erfinder: HAHN, Wolfgang, 93073 Neutraubling (DE); KLEIN, Robert, 93073 Neutraubling (DE)
(74) Vertreter: Grünecker Patent- und Rechtsanwälte PartG mbB
(86) Internationale Anmeldenummer: PCT/EP2016/080397
(87) Internationale Veröffentlichungsnummer: WO 2017/121551

(56) Entgegenhaltungen:
- WO-A1-2010/018224
- DE-A1- 19 623 872
- DE-A1-102007 062 652
- DE-A1-102013 009 229
- DE-U1- 9 204 040
- US-A- 5 123 231

## Beschreibung

Die vorliegende Erfindung betrifft ein Verfahren zum Umstellen des Betriebs einer Behälterbehandlungsanlage und eine Behälterbehandlungsanlage.

### Stand der Technik

Aus dem Stand der Technik sind Verfahren zum Umstellen des Betriebs einer Behälterbehandlungsanlage von einer ersten Betriebsart auf eine zweite Betriebsart bekannt. Darunter fällt beispielsweise das Umstellen der Behälterbehandlungsanlage von einer ersten Sorte Behälter auf eine zweite Sorte Behälter. Auch unterschiedliche Arten der Behandlung, wie gewählte Temperatur oder abzufüllendes Produkt oder Ähnliches sind aus dem Stand der Technik bekannt. Bisher ist es üblich, dass eine Vielzahl von notwendigen Umstellungen, insbesondere das Leerfahren von Behälterbehandlungsmaschinen innerhalb einer Behälterbehandlungsanlage manuell von einem Bediener durchgeführt wird, wenn eine Umstellung der Behätterbehandlungsanlage von einer ersten Betriebsart auf eine zweite Betriebsart erfolgt.

Dies erfordert zum einen die permanente Gegenwart eines Bedieners und zum anderen führt es zu zeitlichen Verzögerungen beim Umstellen des Betriebs, da der Bediener gegebenenfalls zwischen mehreren Behälterbehandlungsmaschinen der Behälterbehandlungsanlage wechseln muss, um die nötigen Umstellungen vorzunehmen.

Es ist aus dem Stand der Technik ebenfalls bekannt, unterbrechungsfrei zwischen zwei Etikettieraggregaten umzuschalten, wobei die Produkte bei einem Produktwechsel mit Hilfe einer Weiche getrennt und seriell abgefördert werden können, siehe DE 10 2007 062 652 A1, das den nächstliegenden Stand der Technik bildet.

### Aufgabe

Ausgehend vom bekannten Stand der Technik besteht die zu lösende Aufgabe somit darin, ein Verfahren zum Umstellen des Betriebs einer Behälterbehandlungsanlage anzugeben, das möglichst ohne Eingreifen eines Bedieners und schneller erfolgen kann.

### Lösung

Diese Aufgabe wird durch das Verfahren zum Umstellen des Betriebs einer Behälterbehandlungsanlage gemäß Anspruch 1 und die Behälterbehandlungsanlage zum Behandeln von Behältern gemäß Anspruch 9 gelöst. Vorteilhafte Weiterbildungen der Erfindung sind in den Unteransprüchen erfasst.

Gemäß dem erfindungsgemäßen Verfahren zum Umstellen des Betriebs einer Behälterbehandlungsanlage von einer ersten Betriebsart auf eine zweite Betriebsart werden die Behälter während der ersten Betriebsart zumindest in einer Behälterbehandlungsmaschine umfassend einen Wärmer und/oder einen Pasteur und/oder einen Rückkühler behandelt, wobei das Verfahren weiterhin umfasst, dass die mit der ersten Betriebsart zu behandelnden Behälter in die Behälterbehandlungsmaschine transportiert werden, wobei die Behälter in der Behälterbehandlungsmaschine behandelt und zum Auslauf der Behälterbehandlungsmaschine transportiert werden, wobei in der Steuerung der Behälterbehandlungsanlage eine Information hinterlegt wird, dass ein Umstellen des Betriebs erfolgen wird, wobei wenigstens ein Sensor die letzten mit der ersten Betriebsart zu behandelnden oder behandelten Behälter erkennt und ein dafür indikatives Signal ausgibt und basierend auf dem indikativen Signal eine Überschubeinrichtung alle Behälter, die mit der ersten Betriebsart behandelt wurden, aus dem Auslauf der Behälterbehandlungsmaschine zu einer Transporteinrichtung am Auslauf der Behälterbehandlungsmaschine transportiert.

Dabei können die erste Betriebsart und die zweite Betriebsart jegliche Umstellung der Behälterbehandlungsanlage und auch einzelner Behälterbehandlungsmaschine betreffen. So kann eine Umstellung auf eine andere Behältersorte erfolgen. Auch Umstellungen eines oder mehrerer Behandlungsparameter, beispielsweise eine in der Behälterbehandlungsmaschine genutzte Temperatur zum Behandeln der Behälter, sind denkbar. Selbst eine Umstellung der Behandlung der Behälter derart, dass eine oder mehrere Behälterbehandlungsmaschinen nach der Umstellung der Behälterbehandlungsanlage bei der Behandlung der Behälter ausgelassen werden oder nach der Umstellung für die Behandlung von Behältern genutzt werden, ist denkbar. Auch das Abfüllen verschiedener Produkte in den verschiedenen Betriebsarten ist denkbar. So können unterschiedlich zu erwärmende oder zu pasteurisierende Produkte in den verschiedenen Betriebsarten in ansonsten gleichartige oder auch verschiedene Behälter gefüllt werden. Allgemein kann die Umstellung der Betriebsart also jeden Vorgang betreffen, der eine Trennung von zwei Produkten, zwei Behältersorten oder deren Behandlung betrifft. Das umfasst insbesondere solche Vorgänge, bei denen der Auslauf einer Behälterbehandlungsmaschine geleert werden muss.

Der Auslauf der Behälterbehandlungsmaschine kann eine Standfläche umfassen, auf die die Behälter von einer in der Behälterbehandlungsmaschine verlaufenden Transportstrecke geschoben werden. Die Standfläche kann den Übergang zwischen einer Transportstrecke in der Behälterbehandlungsmaschine und der Transporteinrichtung bilden. In der Transportstrecke können die Behälter ungeordnet, insbesondere in mehreren Reihen, beispielsweise 10 oder mehr, nebeneinander transportiert werden. Die Transporteinrichtung und die Transportstrecke können als Endlosförderer ausgebildet sein, wobei die Transporteinrichtung eine Breite aufweisen kann, die dem doppelten oder dreifachen Durchmesser eines Behälters entspricht, sodass auch in der Transporteinrichtung ein ungeordneter Transport der Behälter erfolgen kann. Die Überschubeinrichtung kann als beweglicher Überschubbalken vorgesehen sein und insbesondere zu einer Bewegung parallel zur Transportrichtung der Behälter in der Behälterbehandlungsmaschine ausgebildet sein, sodass Behälter von der sich an die Transportstrecke anschließenden Standplatte geschoben werden können. Dabei kann der Transport der Behälter in der Transporteinrichtung schneller erfolgen, als der Transport durch die Behälterbehandlungsmaschine.

Für das erfindungsgemäße Verfahren ist die Anwesenheit oder Interaktion eines Bedieners mit der Behälterbehandlungsanlage zum Leeren des Auslaufs der Behälterbehandlungsmaschine nicht mehr erforderlich. Damit kann Zeit eingespart werden. Ferner kann so ein Vermischen von Behältern, die gemäß der ersten Betriebsart behandelt werden, mit Behältern, die gemäß der zweiten Betriebsart behandelt werden, vermieden werden, da durch die Verwendung der Überschubeinrichtung eine Trennung dieser Behälter erfolgt.

In einer Ausführungsform des Verfahrens definiert die zweite Betriebsart eine von der ersten Betriebsart verschiedenen Behandlung von Behältern in der Behälterbehandlungsmaschine und die Behälterbehandlungsmaschine wird auf die zweite Betriebsart umgestellt, nachdem die mit der ersten Betriebsart behandelten Behälter von der Überschubeinrichtung aus der Behälterbehandlungsmaschine transportiert wurden und bevor mit der zweiten Betriebsart zu behandelnde Behälter in die Behälterbehandlungsmaschine transportiert werden. So wird gewährleistet, dass die mit unterschiedlichen Betriebsarten zu behandelnden Behältern nicht eine Behandlung gemäß der jeweils anderen Betriebsart zumindest teilweise erfahren. Die Qualität der hergestellten Produkte kann damit erhöht werden.

Es kann weiterhin vorgesehen sein, dass die Überschubeinrichtung nach dem Transportieren der Behälter auf die Transporteinrichtung in eine Ausgangsposition im Bereich des Auslaufs der Behälterbehandlungsmaschine bewegt wird und/oder die Überschubeinrichtung die mit der ersten Betriebsart behandelten Behälter aus dem Auslauf transportiert, bevor Behälter, die mit der zweiten Betriebsart behandelt werden, in die Behälterbehandlungsmaschine transportiert werden. Es kann so sichergestellt werden, dass eine räumliche Trennung der auf unterschiedliche Arten behandelten Behälter erfolgt und gleichzeitig die jeweiligen Behälter ausschließlich mit der für sie bestimmten Betriebsart behandelt werden.

In einer weiteren Ausführungsform ist vorgesehen, dass die zweite Betriebsart eine Behandlung von Behältern ohne die Behälterbehandlungsmaschine definiert. Das bedeutet, dass die mit der zweiten Betriebsart zu behandelnden Behälter zwar eine Behandlung in der Behälterbehandlungsanlage erfahren, diese jedoch ohne die Behälterbehandlungsmaschine erfolgt, bevorzugt ohne dass die Behälter überhaupt in die Behälterbehandlungsmaschine transportiert werden.

In einer Weiterbildung dieser Ausführungsform ist vorgesehen, dass die Überschubeinrichtung nach dem Transportieren der gemäß der ersten Betriebsart behandelten Behälter zur Transporteinrichtung in einer Position am Auslauf der Behälterbehandlungsmaschine verbleibt und sich Behälter, die mit der zweiten Betriebsart behandelt werden, an der Überschubeinrichtung entlang der Transporteinrichtung bewegen. Die Überschubeinrichtung kann in dieser Position vorteilhaft genutzt werden, um ein Eintreten der gemäß der zweiten Betriebsart zu behandelnden Behälter in die Behälterbehandlungsmaschine zu vermeiden, selbst wenn diese Behälter gestaut in der Transporteinrichtung transportiert werden.

Weiterhin kann vorgesehen sein, dass eine im Einlauf der Behälterbehandlungsmaschine angeordnete Sperrvorrichtung den Einlauf sperrt, nachdem der letzte mit der 1.ersten Betriebsart zu behandelnde Behälter in die Behälterbehandlungsmaschine eingelaufen ist und bevor ein Behälter, der mit der zweiten Betriebsart behandelt wird, die Sperrvorrichtung passiert. So kann verhindert werden, dass die gemäß der zweiten Betriebsart zu behandelnden Behälter in die Behälterbehandlungsmaschine einlaufen. Die Sperrvorrichtung kann auch in einer zum Einlauf führenden Transporteinrichtung angeordnet und zum Sperren oder Freigeben dieser Transporteinrichtung ausgebildet sein.

In einer Weiterbildung dieser Ausführungsform werden die mit der zweiten Betriebsart zu behandelnden Behälter von der Sperrvorrichtung auf eine Umgehungstransporteinrichtung befördert und von der Umgehungstransporteinrichtung zur Transporteinrichtung am Auslauf der Behälterbehandlungsmaschine transportiert. Durch diese Ausführungsform ist ein vollständiges Umleiten der Behälter um die Behälterbehandlungsmaschine möglich. Behälter dringen somit nicht versehentlich in die Behälterbehandlungsmaschine ein. Gleichzeitig wird der Transportweg der Behälter reduziert, was die Produktionszeit für die mit der zweiten Betriebsart zu behandelnden Behälter reduziert.

Gemäß einer Ausführungsform ist vorgesehen, dass die Behälter von einer weiteren Behälterbehandlungsmaschine gemäß der ersten oder zweiten Betriebsart behandelt werden, bevor die Behälter in die Behälterbehandlungsmaschine transportiert werden. Die weitere Behälterbehandlungsmaschine kann dabei beispielsweise als Füller, der ein Produkt in die Behälter füllt, ausgebildet sein. Auch andere Ausführungsformen der weiteren Behälterbehandlungsmaschine, beispielsweise als Druckmaschine oder Etikettiermaschine, aber auch als Verschließer sind denkbar.

Die erfindungsgemäße Behälterbehandlungsanlage zum Behandeln von Behältern in der getränkeverarbeitenden Industrie umfasst eine in wenigstens zwei Betriebsarten betreibbare Behälterbehandlungsmaschine, die als Wärmer und/oder Pasteur und/oder Rückkühler ausgebildet sein kann, wobei die Behälterbehandlungsmaschine einen Einlauf und einen Auslauf für Behälter umfasst, wobei am Auslauf eine Transporteinrichtung vorgesehen ist und wobei ein Sensor zum Erkennen von in der Behälterbehandlungsmaschine behandelten oder zu behandelnden Behältern vorgesehen ist und wobei die Behälterbehandlungsmaschine eine in Richtung der Transporteinrichtung bewegbare Überschubeinrichtung umfasst, wobei die Behälterbehandlungsanlage zur Durchführung eines der obigen Verfahren ausgebildet ist. Ein Umstellen der Behälterbehandlungsanlage kann somit deutlich zeitsparender und mit weniger Eingriffen durch einen Bediener erfolgen.

In einer Ausführungsform ist die Überschubeinrichtung als Überschubbalken ausgebildet. Dieser kann beispielsweise über den Auslauf in Richtung der Transporteinrichtung bewegt werden, sodass die Behälter vom Auslauf auf die Transporteinrichtung transportiert werden können.

Weiterhin kann vorgesehen sein, dass die Überschubeinrichtung zwischen einer Ausgangsposition und einer Endposition im Auslauf bewegbar angeordnet ist.

Es kann vorgesehen sein, dass die Überschubeinrichtung in der Endposition zur Begrenzung der Transporteinrichtung ausgebildet ist. Auf ein zusätzliches Begrenzungsgeländer, wie ein Steckgeländer, kann so verzichtet werden, falls die Behälterbehandlungsmaschine in einer der Betriebsarten nicht mit Behältern beschickt werden soll.

Weiterhin kann im Einlauf eine Sperrvorrichtung zum Sperren und Freigeben des Einlaufs für Behälter vorgesehen sein. So kann eine Umgehung der Behälterbehandlungsmaschine geschaffen werden, falls eine Betriebsart der Behälterbehandlungsanlage eine Behandlung von Behältern in der Behälterbehandlungsmaschine nicht umfasst.

In einer Weiterbildung dieser Ausführungsform ist stromauf der Sperrvorrichtung eine Umgehungstransporteinrichtung angeordnet, die den Einlauf oder eine zu diesem führende Transporteinrichtung mit der Transporteinrichtung verbindet, wobei Behälter von der Sperrvorrichtung in die Umgehungstransporteinrichtung transportiert werden können, wenn die Sperrvorrichtung den Einlauf für Behälter sperrt. Wird die Behälterbehandlungsmaschine zur Behandlung von Behältern in einer bestimmten Betriebsart nicht verwendet, so kann mit dieser Ausführungsform auch der Transportweg der Behälter verkürzt werden.

In einer Ausführungsform ist vorgesehen, dass stromauf des Einlaufs eine weitere Behälterbehandlungsmaschine angeordnet ist, die ausgebildet ist, Behälter gemäß der ersten und/oder zweiten Betriebsart: der Behälterbehandlungsanlage zu behandeln.

### Kurze Beschreibung der Figuren

- Figur 1: zeigt schematisch eine Draufsicht auf eine Behälterbehandlungsanlage gemäß einer Ausführungsform,
- Figur 2: zeigt eine Ausführungsform der Überschubeinrichtung als Überschubbalken im Auslauf der Behälterbehandlungsmaschine,
- Figur 3a-c: zeigen Ausführungsformen, in der Behälter gemäß zweier Betriebsarten mit der Behälterbehandlungsmaschine behandelt werden und dazugehörige Temperaturprofile,

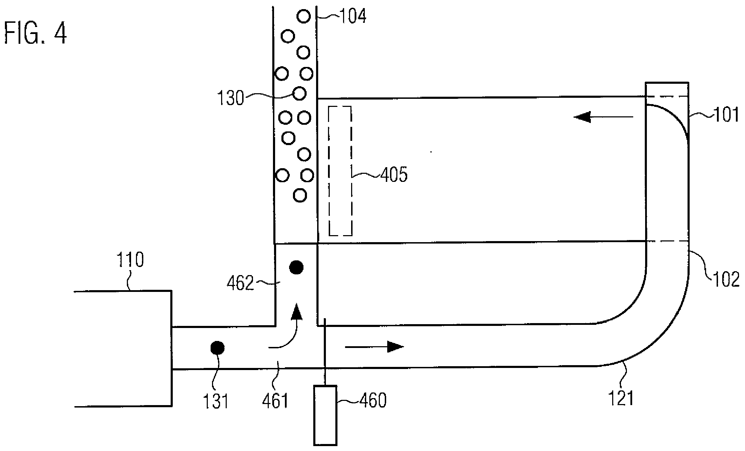

- Figur 4: zeigt eine Ausführungsform, in der Behälter gemäß einer Betriebsart ohne die Behälterbehandlungsmaschine behandelt werden.

### Ausführliche Beschreibung

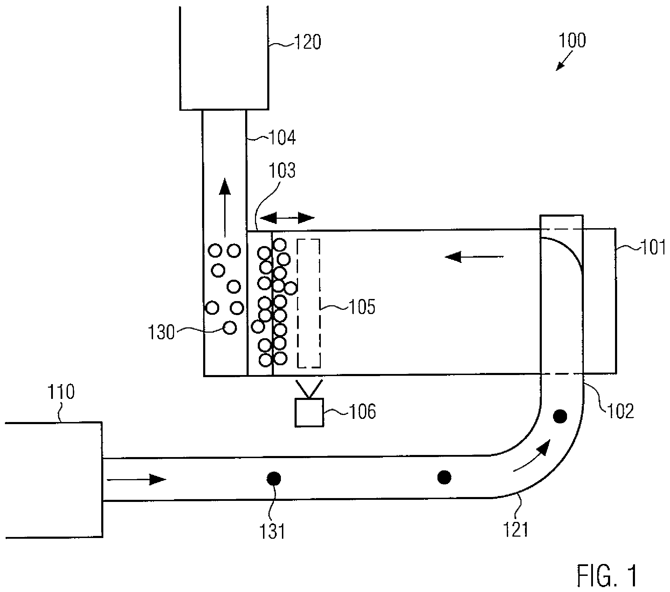

Figur 1 zeigt eine Ausführungsform einer Behälterbehandlungsanlage 100 gemäß der Erfindung. Die Behälterbehandlungsanlage 100 kann mehrere Behälterbehandlungsmaschinen 101, 110, 120 umfassen, die durch geeignete Transporteinrichtungen 121 und 104 miteinander verbunden sind. Erfindungsgemäß umfasst die Behälterbehandlungsanlage 100 zumindest eine Behälterbehandlungsmaschine 101, die als Wärmer, Pasteur oder Rückkühler ausgebildet ist und genutzt werden kann, um die Behälter auf eine bestimmte Temperatur zu erwärmen oder abzukühlen. Dies gilt gleichsam für das in die Behälter eingefüllte Produkt. Die weiteren Behälterbehandlungsmaschinen können beispielsweise Etikettiermaschinen, Füller, Verschließer oder Druckmaschinen sein. Auch andere Behälterbehandlungsmaschinen können in der Anlage 100 integriert sein. Insbesondere können stromauf der Behälterbehandlungsmaschine 101 ein Verschließer und ein Füller angeordnet sein, sodass die Behälter bereits befüllt und verschlossen sind, wenn sie in die Behälterbehandlungsmaschine 101 transportiert werden.

In der Behälterbehandlungsmaschine 101 werden die Behälter 130 üblicherweise langsam und ungeordnet transportiert. Insbesondere können die Behälter zumindest im Bereich der Behälterbehandlungsmaschine dicht an dicht in Gruppen von Behältern order einem kontinuierlichen, ungeordneten Strom von Behältern transportiert werden. Der Transport durch die Behälterbehandlungsmaschine 101 kann dabei zwischen mehreren Minuten bis zu einer Stunde oder mehr (insbesondere in Pasteuren) dauern. Das Fassungsvermögen der Behälterbehandlungsmaschine 101 beträgt daher üblicherweise mehrere 1.000 bis 10.000 Behälter. Da die Behälter als kontinuierlicher Strom in der Behälterbehandlungsmaschine 101 transportiert werden, entsteht in der mit dem Pfeil dargestellten Transportrichtung ein Staudruck der Behälter am Auslauf 103 der Behälterbehandlungsmaschine 101. Durch diesen Staudruck werden die in Transportrichtung vorderen Behälter durch die in Transportrichtung hinteren Behälter auf die Transporteinrichtung 104, die sich an dem Auslauf 103 anschließt, geschoben und können von dieser einer anderen Behälterbehandlungsmaschine 120 zugeführt werden.

Der Behälterbehandlungsmaschine 101 werden zu behandelnde Behälter über einen Einlauf 102 und eine damit verbundene Transporteinrichtung 121, wie beispielsweise ein Förderband, zugeführt. Davor können die Behälter in einer stromauf der Behälterbehandlungsmaschine 101 angeordneten weiteren Behälterbehandlungsmaschine 110, wie einer Druckmaschine, einer Etikettiermaschine, einem Füller oder einem Verschließer behandelt worden sein.

In dem erfindungsgemäßen Verfahren ist nun vorgesehen, dass im laufenden Betrieb der Behälterbehandlungsanlage 100 eine Umstellung der Betriebsart der Behälterbehandlungsanlage von einer ersten Betriebsart auf eine zweite Betriebsart erfolgt. Diese Umstellung kann umfassen, dass in der ersten Betriebsart Behälter einer ersten Sorte und in der zweiten Betriebsart Behälter einer zweiten Sorte behandelt werden sollen. Die Sorten der Behälter können sich beispielsweise in ihrer Größe unterscheiden. Alternativ oder zusätzlich können Prozessparameter bei der Behandlung der Behälter gemäß der ersten Betriebsart von Prozessparametern bei der Behandlung gemäß der zweiten Betriebsart verschieden sein. Insbesondere können die Temperaturprofile, entsprechend welchen die Behälter in der Behälterbehandlungsmaschine 101 behandelt werden, für die erste Betriebsart und die zweite Betriebsart verschieden sein. Auch andere Prozessparameter, wie beispielsweise das in die Behälter eingefüllte Produkt, können verschieden sein. Grundsätzlich beschreiben die Betriebsarten die Gesamtheit aller Merkmale, die die Behälterbehandlung in der Behätterbehandlungsanlage und die Behälter charakterisiert.

Da eine Vermischung der mit den unterschiedlichen Betriebsarten behandelten Behälter im Bereich der Behälterbehandlungsmaschine dazu führen kann, dass die weitere Behandlung der Behälter nicht korrekt erfolgt (beispielsweise das Aufbringen von Etiketten oder Bedrucken der Behälter in einer stromab angeordneten Maschine), ist vorgesehen, dass die gemäß der ersten Betriebsart behandelten Behälter 130 von den gemäß der zweiten Betriebsart behandelten Behältern 131 vollständig zumindest räumlich getrennt werden.

Zu diesem Zweck ist vorgesehen, dass ein Sensor 106 die letzten entsprechend der ersten Betriebsart behandelten Behälter erkennen kann. Der Sensor 106 kann beispielsweise im Bereich des Auslaufs 103 der Behälterbehandlungsmaschine 101 angeordnet sein und eine Lücke zwischen den gemäß der ersten Betriebsart behandelten Behältern und den gemäß der zweiten Betriebsart behandelten Behältern erkennen. Wird diese Lücke erkannt (beispielsweise durch einen Sensor, der als Lichtschranke ausgeführt ist), wird ein für diese Erkennung indikatives Signal ausgegeben. Dieses Signal kann an eine Steuerung der Behälterbehandlungsanlage 100 oder der Behälterbehandlungsmaschine 101 übertragen werden. Zusätzlich kann eine Information in der Steuerung der Behälterbehandlungsanlage oder der Behälterbehandlungsmaschine hinterlegt sein, die den Wechsel von der ersten Betriebsart auf die zweiten Betriebsart definiert. Weitere Ausführungsformen des Sensors sind denkbar. So kann es sich auch um mehrere Sensoren handeln. Beispielsweise kann ein Sensor am Einlauf vorgesehen sein, der die mit unterschiedlichen Betriebsarten behandelten Behälter (beispielsweise über einen in diese integrierten RFID-Transponder) erkennt. Zusätzlich kann ein Sensor zur Bestimmung der Laufzeit der Behälter in der Behälterbehandlungsmaschine basierend auf der Geschwindigkeit der Transporteinrichtung in der Behälterbehandlungsmaschine vorgesehen sein. Aus diesen Werten kann dann bestimmt werden, wann die letzten gemäß der ersten Betriebsart behandelten Behälter den Auslauf der Behälterbehandlungsmaschine erreichen.

Anhand der gesammelten/übermittelten und hinterlegten Informationen kann die Steuereinheit bzw. Steuerung der Behälterbehandlungsanlage eine Überschubeinrichtung 105 steuern, um sämtliche noch im Auslauf 103 der Behälterbehandlungsmaschine 101 befindlichen Behälter 130, die gemäß der ersten Betriebsart behandelt werden bzw. wurden, auf die Transporteinrichtung 104 zu transportieren. Der Auslauf 103 wird somit geleert und ein Abstand zwischen den gemäß der zweiten Betriebsart behandelten Behältern und den gemäß der ersten Betriebsart behandelten Behältern wird erzeugt oder vergrößert. Ein Vermischen der Behälter, die gemäß der ersten Betriebsart behandelt wurden, mit Behältern, die gemäß der zweiten Betriebsart behandelt wurden, kann so vermieden werden.

Besonders vorteilhaft ist es, wenn bei Erkennen einer Lücke nur dann die Überschubeinrichtung aktiviert wird, wenn gleichzeitig die Information über einen Wechsel der Betriebsart vorliegt. Liegt beispielsweise für einen stromauf der Behälterbehandlungsmaschine angeordneten Füller die Information vor, dass die Betriebsart gewechselt wird, also die Produktion eines ersten Produkts beendet wird, so kann diese Information zusammen mit der Mindesttransportzeit für die Behälter vom Füller bis zum Auslauf der Behälterbehandlungsmaschine 101 genutzt werden, um die letzten mit der ersten Betriebsart behandelten Behälter zu erkennen. Tritt nach Ablauf der Mindesttransportzeit eine Lücke im Behälterstrom auf und wird von einem entsprechenden Sensor erkannt, kann diese Lücke als Wechsel in der Betriebsart interpretiert und die Überschubeinrichtung 105 gesteuert werden, um den Auslauf zu leeren.

Zusätzlich oder alternativ zu dem im Bereich des Auslaufs 103 vorgesehenen Sensor kann weiterhin ein Sensor beispielsweise im Einlaufbereich 102 angeordnet sein. Weiterhin kann die Bewegung der Behälter durch eine Geschwindigkeitsmessung der Transporteinrichtung in der Behälterbehandlungsmaschine überwacht werden. Ist beispielsweise bekannt, dass die Behälter vom Einlauf 102 in die Behälterbehandlungsmaschine 101 bis zum Erreichen des Auslaufs 103 der Behälterbehandlungsmaschine 101 10 Minuten in der Behälterbehandlungsmaschine verweilen, so kann bei Feststellen einer Lücke im Einlauf die Überschubeinrichtung dazu genutzt werden, um die nach 10min noch im Auslauf 103 verbleibenden Behälter, die gemäß der ersten Betriebsart behandelt wurden, in die Transporteinrichtung 104 zu transportieren.

Während sich in der in Figur 1 dargestellten Ausführungsform keine gemäß der zweiten Betriebsart behandelten Behälter oder zu behandelnden Behälter 131 in der Behälterbehandlungsmaschine 101 befinden, sind auch Ausführungsformen denkbar, bei denen sich in dem Moment, in dem die gemäß der ersten Betriebsart behandelten Behälter 130 von der Überschubeinrichtung 105 auf die Transporteinrichtung 104 transportiert werden, bereits gemäß der zweiten Betriebsart behandelte Behälter 131 in der Behälterbehandlungsmaschine befinden. Dies trifft insbesondere auf Ausführungsformen zu, bei denen sich die Betriebsarten nicht hinsichtlich der in der Behälterbehandlungsmaschine 101 verwendeten Behandlungsparameter (wie beispielsweise Temperatur oder Verweildauer der Behälter) unterscheiden. Es sei erwähnt, dass dies bei Pasteuren üblicherweise nicht der Fall ist, da hier die Behandlung der befüllten Behälter üblicherweise in mehreren Zonen mit unterschiedlichen Temperaturen erfolgt, sodass eine Umstellung der Behandlung der Behälter in einer ersten Zone (Wechsel der Betriebsart) auch dann möglich ist, wenn noch mit einer anderen Betriebsart zu behandelnde Behälter in einer zweiten Zone im Pasteur vorhanden sind.

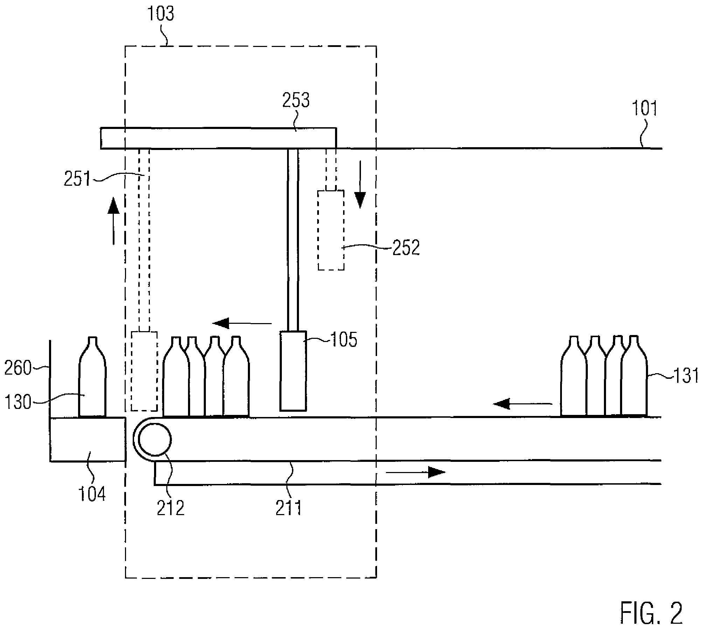

Figur 2 zeigt eine detailliertere Ansicht des Bereichs der Behälterbehandlungsmaschine 101, der den Auslauf 103 umfasst. In der Behälterbehandlungsmaschine 101 können die Behälter mittels einer Transporteinrichtung 211, wie einem Förderband, transportiert werden. Dieses Förderband kann als Endlosförderer ausgebildet sein und am Ende der Behälterbehandlungsmaschine 101 um eine Umlenkrolle 212 laufen. An diese Umlenkrolle schließt sich die Transporteinrichtung 104 an, die die Behälter in eine Richtung beispielsweise senkrecht zur Zeichenebene abtransportiert. Da zwischen diesen Einrichtungen üblicherweise eine geringe Lücke existiert, die von einem unbeweglichen Übergangsblech geschlossen oder überbrückt sein kann, kann bei fehlendem Staudruck von nachfolgenden Behältern ein Behälter gegebenenfalls im Auslaufbereich 103 verweilen, ohne dass er auf die Transporteinrichtung 104 transportiert wird. Dies ist insbesondere dann der Fall, wenn die Behälter Lücken zueinander aufweisen. Zu diesem Zweck wird die Überschubeinrichtung 105 eingesetzt, um die noch verbleibenden Behälter 130 auf die Transporteinrichtung 104 zu transportieren.

In der in Figur 2 dargestellten Ausführungsform wird davon ausgegangen, dass eine entsprechende Lücke insbesondere dann entsteht, wenn von einer ersten Betriebsart auf eine zweite Betriebsart umgestellt wird. Die gemäß der ersten Betriebsart behandelten Behälter 130 befinden sich dabei bereits im Bereich des Auslaufs 103 und die gemäß der zweiten Betriebsart behandelten Behälter 131 befinden sich noch im Bereich der Behälterbehandlungsmaschine 101, wobei zwischen den Behältern 130 und den Behältern 131 eine Lücke ohne Behälter vorhanden ist. Diese Lücke kann, wie bereits mit Bezug auf Figur 1 beschrieben, von einem entsprechenden Sensor, wie beispielsweise einer Lichtschranke, erkannt werden. Basierend auf einem dafür indikativen Signal kann dann die Überschubeinrichtung, die hier als Überschubbalken 105 dargestellt ist, aus einer Ausgangsposition 252, die beispielsweise oberhalb der Transporteinrichtung 211 vorgesehen ist, in Transportrichtung hinter die Behälter 130 bewegt werden und in Transportrichtung auf die Behälter 130 zu bewegt werden, bis der Überschubbalken in der gestrichelt dargestellten Position 251 angelangt ist. Alle in Transportrichtung vor dem Überschubbalken befindlichen Behälter 130 werden dadurch von dem Überschubbalken 105 auf die Transporteinrichtung 104 transportiert und können so aus dem Auslauf 103 entfernt werden. Anschließend kann die Überschubeinrichtung bzw. der Überschubbalken 105 wieder in die Ausgangsposition 252 am Beginn des Auslaufs 103 zurückgefahren werden.

Die Ausführungsform gemäß Fig. 2 ist nur beispielhaft. Es sind auch andere Ausführungsformen der Überschubeinrichtung denkbar. Insbesondere kann die Überschubeinrichtung als schwenkbarer Balken ausgebildet sein, der in einer Ebene parallel zur Transportebene der Behälter in Richtung der Transporteinrichtung 104 geschwenkt werden kann, um den Auslauf zu leeren.

Zum Antrieb der Überschubeinrichtung 105 ist hier schematisch eine Antriebseinrichtung 253 dargestellt. Diese kann durch die Steuerung oder Steuereinheit beispielsweise basierend auf dem Signal des in Figur 1 dargestellten Sensors gesteuert werden. Um zu verhindern, dass gegebenenfalls eine Aktivierung der Überschubeinrichtung bei Auftreten einer Lücke erfolgt, ohne dass eine Änderung der Betriebsart stattfindet, kann vorgesehen sein, dass die Steuerung den Überschubbalken nur aktiviert, wenn zusätzlich zu der erkannten Lücke eine Information darüber vorliegt, dass ein Wechsel von der ersten Betriebsart auf die zweite Betriebsart erfolgen soll. In diesem Fall ist es ausreichend, wenn die zwischen den Behältern 130 und den Behältern 131 entstehende Lücken nur wenige Zentimeter in Transportrichtung misst, sodass der Überschubbalken zwischen die Behälter 130 auf der einen Seite und die Behälter 131 auf der anderen Seite bewegt werden kann. Mögliche Stillstandszeiten oder Puffer, die zum Zurückhalten der gemäß der zweiten Betriebsart zu behandelnden Behälter 131 genutzt werden könnten, können so entfallen, falls die Behandlung in der Behälterbehandlungsmaschine für beide Betriebsarten gleich ist.

Es sei erwähnt, dass an der Transporteinrichtung 104 ein zusätzliches Geländer 260 vorgesehen sein kann, dass ein Herausfallen der Behälter 130, insbesondere wenn diese von der Überschubeinrichtung 105 auf die Transportrichtung 104 transportiert werden, verhindert. Dieses Geländer 260 kann auf der Seite der Transporteinrichtung 104 angeordnet sein, die dem Auslauf 103 der Behälterbehandlungsmaschine 101 gegenüberliegt.

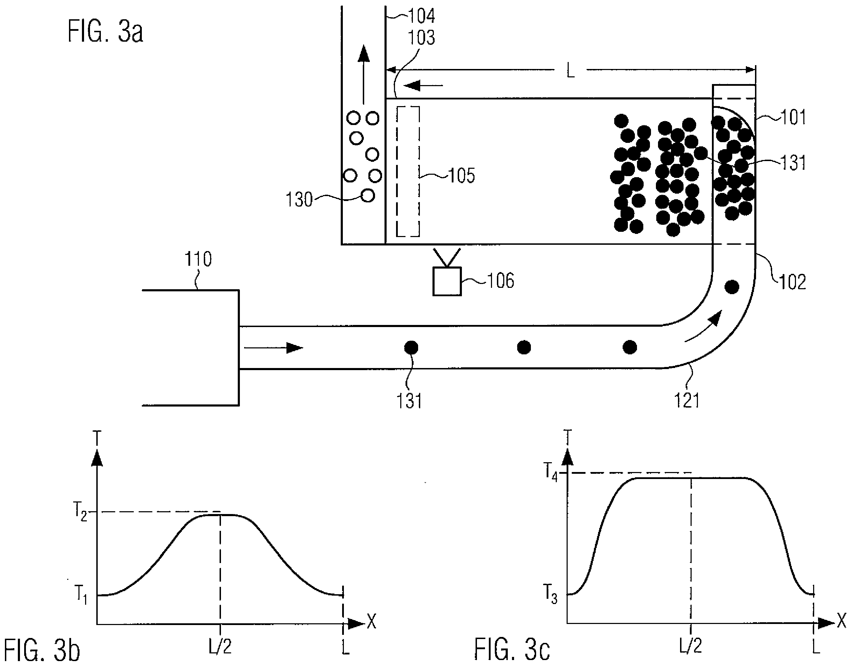

Figur 3 zeigt eine Ausführungsform des Verfahrens, bei dem sich die erste Betriebsart und die zweite Betriebsart der Behälterbehandlungsanlage hinsichtlich des in der Behälterbehandlungsmaschine 101 vorgesehenen Temperaturprofils unterscheiden. Anstelle des Temperaturprofils kann auch jeder andere für die Behandlung der Behälter in der Behälterbehandlungsmaschine 101 relevante Parameter der Betriebsarten verschieden sein. In einem solchen Fall ist vorgesehen, dass die gemäß der ersten Betriebsart behandelten Behälter 130 von der Überschubeinrichtung 105 aus der Behälterbehandlungsmaschine 101 auf die Transporteinrichtung 104 transportiert werden, bevor die Behälterbehandlungsmaschine auf das Temperaturprofil gemäß der zweiten Betriebsart eingestellt wird und ggf. auch bevor gemäß der zweiten Betriebsart zu behandelnde Behälter in die Behälterbehandlungsmaschine 101 transportiert werden.

Die gemäß der ersten Betriebsart behandelten Behälter 130 verlassen also zumindest den Bereich der Behälterbehandlungsmaschine 101, in dem sie auf eine bestimmte Temperatur erwärmt oder abgekühlt werden, bevor die gemäß der zweiten Betriebsart 131 zu behandelnden Behälter in einen Bereich der Behälterbehandlungsmaschine 101 eintreten, in dem sie auf die durch die zweite Betriebsart bestimmte Temperatur erwärmt oder abgekühlt werden. Da der Bereich, in dem die Behälter gemäß der ersten Betriebsart und der zweiten Betriebsart verschiedene Temperaturen erfahren, sich nicht notwendig über die gesamte Länge L der Behälterbehandlungsmaschine erstreckt, können sich bereits Behälter 131 (die gemäß der zweiten Betriebsart zu behandeln sind) im Bereich des Einlaufs 102 oder sogar im Bereich der Behälterbehandlungsmaschine 101 befinden, bevor sämtliche Behälter 130 (die gemäß der ersten Betriebsart behandelt wurden) den Auslauf verlassen. Dies kann beispielsweise durch eine entsprechende Steuerung der Transportgeschwindigkeit der Behälter in der Transporteinrichtung 121, die die Behälter 131 zum Einlauf der Behälterbehandlungsmaschine 101 führt, erreicht werden.

Es sei erwähnt, dass, insbesondere bei Behälterbehandlungsmaschinen 101, die zonenweise arbeiten (also in verschiedenen Zonen die Behälter unterschiedlich und unabhängig von anderen Zonen erwärmen oder kühlen), die Behälter, die gemäß der ersten Betriebsart behandelt wurden, nicht aus der gesamten Behälterbehandlungsmaschine entfernt werden müssen, bevor mit der zweiten Betriebsart zu behandelnde Behälter in diese transportiert werden. Hier genügt es, wenn die Behälter, die gemäß der ersten Betriebsart behandelt werden, sich zumindest nicht in einer Zone innerhalb der Behälterbehandlungsmaschine befinden, in der mit der zweiten Betriebsart zu behandelnde Behälter behandelt werden. Dies kann durch eine ausreichend große Lücke im Strom der Behälter gewährleistet werden. Die Lücke kann beispielsweise der Breite der entsprechenden Zone in Transportrichtung der Behälter entsprechen oder größer sein.

Alternativ oder zusätzlich kann eine Unterbrechung der Behandlung der Behälter bei der Umstellung von der ersten Betriebsart auf die zweite Betriebsart in einer Behälterbehandlungsmaschine 110, die stromauf der Behälterbehandlungsmaschine 101 angeordnet ist, vorgesehen sein. Dies kann vorteilhaft während einer Umrüstung der Behälterbehandlungsmaschine 110 erfolgen. Während dieser Umrüstung kann vorgesehen sein, dass die Behälterbehandlungsmaschine 110 ohnehin keine weitere Behandlung von Behältern durchführt. Damit entsteht automatisch nach dem Verlassen des letzten mit der ersten Betriebsart zu behandelnden Behälters eine Lücke im Behälterstrom, bis die Behälterbehandlungsmaschine 110 die Behandlung von Behältern gemäß der zweiten Betriebsart aufnimmt.

Um den Verlauf von möglichen, während der ersten oder der zweiten Betriebsart vorgesehenen Temperaturprofilen in der Behälterbehandlungsmaschine zu veranschaulichen, zeigen die Figuren 3b und 3c unterschiedliche Temperaturprofile, wie sie über die Länge L der Behälterbehandlungsmaschine vorgesehen sein können. Diese Temperaturprofile können beispielsweise durch eine Vielzahl von Infrarotquellen bzw. Infrarotstrahlern erzeugt werden, deren Leistung über die Länge der Behälterbehandlungsmaschine variiert. Ferner können die unterschiedlichen Temperaturprofile durch besprühen der Behälter mit temperiertem (warmem oder kaltem) Wasser (Überschwallen) erreicht werden. Gemäß dem in Figur 3b dargestellten Temperaturprofil werden die Behälter beim Durchlaufen der Behälterbehandlungsmaschine von einer Temperatur T1 allmählich auf eine Temperatur T2 erwärmt. Nachdem diese Temperatur erreicht wurde, werden die Behälter wieder langsam auf ihre ursprüngliche Temperatur T1 abgekühlt. Das kann beispielsweise dadurch erreicht werden, dass in diesem Bereich der Behälterbehandlungsmaschine keine Infrarotstrahler eingeschaltet sind oder die Behälter nicht mit temperiertem Wasser beaufschlagt werden.

In der in Figur 3c dargestellten Ausführungsform hingegen werden die Behälter zunächst schneller von einer anfänglichen Temperatur T3 auf eine Temperatur T4 erwärmt. Diese Temperatur wird über einen Großteil der Länge der Behälterbehandlungsmaschine 101 beibehalten. Anschließend werden die Behälter kurz vor Verlassen der Behälterbehandlungsmaschine 101 wieder auf die Temperatur T3 abgekühlt. Ein schnelleres Abkühlen kann beispielsweise durch Beaufschlagen dieses Bereichs der Behälterbehandlungsmaschine mit kalter Luft erfolgen.

Es sind auch andere Ausführungsformen der Temperaturprofile denkbar, bei denen die Behälter beispielsweise nicht erwärmt werden, sondern lediglich abgekühlt werden. Auch ist nicht erforderlich, dass die Behälter nach Verlassen der Behälterbehandlungsmaschine 101 oder während ihres Transports durch die Behälterbehandlungsmaschine 101 wieder auf ihre Ausgangstemperatur temperiert werden.

In einer alternativen Ausführungsform kann vorgesehen sein, dass sich die Betriebsarten derart unterscheiden, dass gemäß der ersten Betriebsart vorgesehen ist, dass die Behälter 130 in der Behälterbehandlungsmaschine 101 behandelt werden (beispielsweise erwärmt oder abgekühlt), wohingegen die gemäß der zweiten Betriebsart zu behandelnden Behälter 131 nicht in der Behälterbehandlungsmaschine 101 behandelt werden.

In einem solchen Fall kann zum einen die Behälterbehandlungsmaschine 101 nach dem Verlassen der Behälter 130 ausgeschaltet werden, um Energie zu sparen. Aufgrund der für einen entsprechenden Temperaturausgleich notwendigen Zeit würden jedoch Behälter, die gemäß der zweiten Betriebsart behandelt werden sollen, eine Erwärmung oder Abkühlung in der Behälterbehandlungsmaschine 101 erfahren, selbst wenn diese ausgeschaltet ist.

Um dies zu verhindern und gleichzeitig die Transportdauer der gemäß der zweiten Betriebsart zu behandelnden Behälter vorteilhaft zu verkürzen, kann vorgesehen sein, dass nach Umstellen der Behälterbehandlungsanlage von der ersten Betriebsart auf die zweite Betriebsart der Einlauf 102 bzw. die Transportstrecke 121, in der Behälter von der ersten Behälterbehandlungsmaschine 110 zum Einlauf 102 der Behälterbehandlungsmaschine 101 transportiert werden können, durch eine Sperrvorrichtung 460 blockiert wird, so dass keine Behälter in die Behälterbehandlungsmaschine oder einen Abschnitt der Transportstrecke 121, der zum Einlauf 102 führt, gelang.

Zusätzlich kann sich an der Transportstrecke 461, die Behälter aus der Behälterbehandlungsmaschine 110 abtransportiert, eine Umgehungstransporteinrichtung 462 anschließen. Diese Umgehungstransporteinrichtung kann so angeordnet sein, dass Behälter aus der Transportstrecke 461 auf die Transportstrecke 104 transportiert werden.

Das Umlenken der in der Transportstrecke 461 eigentlich in Richtung des Einlaufs 102 transportierten Behälter kann durch die Sperrvorrichtung 460 bewirkt werden. Zu diesem Zweck kann die Sperrvorrichtung nicht, wie hier dargestellt, als senkrecht zur Transportrichtung vorgesehener Schieber ausgebildet sein, sondern kann beispielsweise schräg zur Transportrichtung verlaufen, sodass Behälter aus der Transportstrecke 461 bereits auf die Transportstrecke bzw. die Umgehungstransporteinrichtung 462 umgelenkt werden.

Zusätzlich kann in dieser Ausführungsform die Überschubeinrichtung 405, nachdem sie die gemäß der ersten Betriebsart behandelten Behälter 130 aus der Behälterbehandlungsmaschine 101 auf die Transporteinrichtung 104 transportiert hat, als Begrenzung der Transporteinrichtung 104 genutzt werden. Da der Auslauf der Behälterbehandlungsmaschine 101 ohne die Überschubeinrichtung offen wäre, könnten Behälter 131, die von der Umgehungstransporteinrichtung auf die Transporteinrichtungen 104 transportiert werden, in den Auslauf der Behälterbehandlungsmaschine 104 eindringen und hier stehen bleiben oder umkippen. Um die Transporteinrichtung 104 zu begrenzen, ist daher in dieser Ausführungsform vorgesehen, dass die Überschubeinrichtung 405 nach dem Transportieren der Behälter 130 auf die Transportrichtung 104 in der Endposition, in der sie beispielsweise mit der Transporteinrichtung 104 bündig abschließt und zumindest den Auslauf der Behälterbehandlungsmaschine 101 verschließt, verbleibt und während der Behandlung der Behälter 131 gemäß der zweiten Betriebsart den Auslauf der Behälterbehandlungsmaschine 101 blockiert. Zusätzlich kann die Überschubeinrichtung in dieser Ausführungsform ein erhöhtes Geländer umfassen, sodass die Überschubeinrichtung eine Höhe aufweist, die größer ist als die Höhe der Behälter. Selbst bei erheblichem Staudruck der in der Transporteinrichtung 104 transportierten Behälter kann so verhindert werden, dass Behälter beispielsweise über die Überschubeinrichtung kippen und in die Behälterbehandlungsmaschine 101 gelangen.

## Patentansprüche

1. Verfahren zum Umstellen des Betriebs einer Behälterbehandlungsanlage (100) von einer ersten Betriebsart auf eine zweite Betriebsart, wobei Behälter (130) während der ersten Betriebsart zumindest in einer Behälterbehandlungsmaschine (101) umfassend einen Wärmer und/oder einen Pasteur und/oder einen Rückkühler behandelt werden, wobei das Verfahren weiterhin umfasst, dass alle mit der ersten Betriebsart zu behandelnden Behälter (130) in die Behälterbehandlungsmaschine (101) transportiert werden, wobei die Behälter in der Behälterbehandlungsmaschine behandelt und zum Auslauf (103) der Behälterbehandlungsmaschine transportiert werden, wobei in der Steuerung der Behälterbehandlungsanlage (100) eine Information hinterlegt wird, dass ein Umstellen des Betriebs erfolgen wird, wobei wenigstens ein Sensor (106) die letzten mit der ersten Betriebsart zu behandelnden oder behandelten Behälter (130) erkennt und ein dafür indikatives Signal ausgibt und basierend auf dem indikativen Signal eine Überschubeinrichtung (105) die Behälter (130), die mit der ersten Betriebsart behandelt wurden, aus dem Auslauf (103) der Behälterbehandlungsmaschine (101) zu einer Transporteinrichtung (104) am Auslauf der Behälterbehandlungsmaschine transportiert.

2. Verfahren nach Anspruch 1, wobei die zweite Betriebsart eine von der ersten Betriebsart verschiedene Behandlung von Behältern (131) in der Behälterbehandlungsmaschine (101) definiert und die Behälterbehandlungsmaschine auf die zweite Betriebsart umgestellt wird, nachdem die mit der ersten Betriebsart behandelten Behälter (130) von der Überschubeinrichtung (105) aus der Behälterbehandlungsmaschine transportiert wurden und bevor mit der zweiten Betriebsart zu behandelnde Behälter (131) in die Behälterbehandlungsmaschine (101) transportiert werden.

3. Verfahren nach Anspruch 1 oder 2, wobei die Überschubeinrichtung (105) nach dem Transportieren der Behälter auf die Transporteinrichtung (104) in eine Ausgangsposition (252) im Bereich des Auslaufs (103) der Behälterbehandlungsmaschine (101) bewegt wird und/oder wobei die Überschubeinrichtung (105) die mit der ersten Betriebsart behandelten Behälter (103) aus dem Auslauf transportiert, bevor Behälter (131), die mit der zweiten Betriebsart behandelt werden, in die Behälterbehandlungsmaschine (101) transportiert werden.

4. Verfahren nach Anspruch 1, wobei die zweite Betriebsart eine Behandlung von Behältern (131) ohne die Behälterbehandlungsmaschine definiert.

5. Verfahren nach Anspruch 4, wobei die Überschubeinrichtung (105) nach dem Transportieren der Behälter zur Transporteinrichtung (104) in einer Position am Auslauf (103) der Behälterbehandlungsmaschine verbleibt und sich Behälter (131), die mit der zweiten Betriebsart behandelt werden, an der Überschubeinrichtung entlang der Transporteinrichtung bewegen.

6. Verfahren nach Anspruch 4 oder 5, wobei eine im Einlauf (102) der Behälterbehandlungsmaschine angeordnete Sperrvorrichtung (460) den Einlauf sperrt, nachdem der letzte mit der ersten Betriebsart zu behandelnde Behälter (130) in die Behälterbehandlungsmaschine (101) transportiert wurde und bevor ein Behälter (131), der mit der zweiten Betriebsart behandelt wird, die Sperrvorrichtung passiert.

7. Verfahren nach Anspruch 6, wobei die mit der zweiten Betriebsart zu behandelnden Behälter (131) von der Sperrvorrichtung (460) auf eine Umgehungstransporteinrichtung (462) befördert werden und von der Umgehungstransporteinrichtung (462) zur Transporteinrichtung (104) am Auslauf (103) der Behälterbehandlungsmaschine (101) transportiert werden.

8. Verfahren nach einem der Ansprüche 1 bis 7, wobei die Behälter von einer weiteren Behälterbehandlungsmaschine (110) gemäß der ersten oder zweiten Betriebsart behandelt werden, bevor die Behälter in die Behälterbehandlungsmaschine (101) transportiert werden.

9. Behälterbehandlungsanlage (100) zum Behandeln von Behältern in der getränkeverarbeitenden Industrie, mit einer in wenigstens zwei Betriebsarten betreibbaren Behälterbehandlungsmaschine (101) umfassend einen Wärmer und/oder einen Pasteur und/oder einen Rückkühler, wobei die Behälterbehandlungsmaschine einen Einlauf (102) und einen Auslauf (103) umfasst, wobei eine Transporteinrichtung (104) zum Abtransportieren der Behälter am Auslauf vorgesehen ist und wobei ein Sensor (106) zum Erkennen von in der Behälterbehandlungsmaschine behandelten oder zu behandelnden Behältern vorgesehen ist und wobei die Behälterbehandlungsmaschine (101) eine in Richtung der Transporteinrichtung (104) bewegbare Überschubeinrichtung (105) umfasst, wobei die Behälterbehandlungsanlage (100) zur Durchführung eines Verfahrens nach einem der Ansprüche 1 bis 8 ausgebildet ist.

10. Behälterbehandlungsanlage (101) nach Anspruch 9, wobei die Überschubeinrichtung (105) als Überschubbalken ausgebildet ist.

11. Behälterbehandlungsanlage (100) nach Anspruch 9 oder 10, wobei die Überschubeinrichtung (105) zwischen einer Ausgangsposition (252) und einer Endposition (251) im Auslauf (103) bewegbar angeordnet ist.

12. Behälterbehandlungsanlage (100) nach Anspruch 11, wobei die Überschubeinrichtung (105) in der Endposition: (251) zur Begrenzung der Transporteinrichtung (104) ausgebildet ist.

13. Behälterbehandlungsanlage (100) nach einem der Ansprüche 9 bis 12, wobei im Einlauf (102) oder einer zum Einlauf führenden Transporteinrichtung (121) der Behälterbehandlungsanlage (100) eine Sperrvorrichtung (460) zum Sperren und Freigeben des Einlaufs für Behälter vorgesehen ist.

14. Behälterbehandlungsanlage (100) nach Anspruch 13, wobei stromauf der Sperrvorrichtung (460) eine Umgehungstransporteinrichtung (462) der Behälterbehandlungsanlage (100) angeordnet ist, wobei die Umgehungstransporteinrichtung (462) eine Transportstrecke (461) für Behälter mit der Transporteinrichtung (104) verbindet, wobei Behälter von der Sperrvorrichtung (460) in die Umgehungstransporteinrichtung (462) transportiert werden können, wenn die Sperrvorrichtung den Einlauf für Behälter sperrt.

15. Behälterbehandlungsanlage (100) nach einem der Ansprüche 9 bis 14, wobei stromauf des Einlaufs (102) eine weitere Behälterbehandlungsmaschine (110) der Behälterbehandlungsanlage (100) angeordnet ist, wobei die weitere Behälterbehandlungsmaschine (110) ausgebildet ist, Behälter gemäß einer ersten und/oder zweiten Betriebsart der Behälterbehandlungsanalage (100) zu behandeln.

## Claims

1. Method for switching the operation of a container treatment system (100) from a first operating mode to a second operating mode, wherein containers (130) are treated at least in one container treatment machine (101) comprising a heater, a pasteurizer, or a heat exchanger in the first operating mode, wherein the method further comprises that all containers (130) to be treated in the first operating mode are transported into the container treatment machine (101), wherein the containers are treated in the container treatment machine and are transported to the outlet (103) of the container treatment machine, wherein information indicating that the operation will be switched is stored in the controller of the container treatment system (100), wherein at least one sensor (106) detects the last containers (130) treated or to be treated in the first operating mode and outputs a signal indicating the same, and a transferring device (105) transports the containers (130) which have been treated in the first operating mode from the outlet (103) of the container treatment machine (101) to a transport device (104) at the outlet of the container treatment machine on the basis of the indicative signal.

2. Method according to claim 1, wherein the second operating mode defines a treatment of containers (131) in the container treatment machine (101) other than in the first operating mode, and the container treatment machine is switched to the second operating mode after the containers (130) treated in the first operating mode have been transported out of the container treatment machine by the transferring device (105) and before containers (131) to be treated in the second operating mode are transported into the container treatment machine (101).

3. Method according to claim 1 or 2, wherein the transferring device (105) is, after the transport of the containers onto the transport device (104), moved into a starting position (252) in the region of the outlet (103) of the container treatment machine (101), and/or wherein the transferring device (105) transports the containers (103) treated in the first operating mode out of the outlet before containers (131) that are treated with the second operating mode are transported into the container treatment machine (101).

4. Method according to claim 1, wherein the second operating mode defines a treatment of containers (131) without the container treatment machine.

5. Method according to claim 4, wherein the transferring device (105) remains, after the transport of the containers to the transport device (104), in a position at the outlet (103) of the container treatment machine, and containers (131) treated in the second operating mode move at the transferring device along the transport device.

6. Method according to claim 4 or 5, wherein a blocking device (460) disposed in the inlet (102) of the container treatment machine blocks the inlet after the last container (130) to be treated in the first operating mode has been transported into the container treatment machine (101) and before a container (131) treated in the second operating mode passes the blocking device.

7. Method according to claim 6, wherein the containers (131) to be treated in the second operating mode are conveyed from the blocking device (460) onto a bypass transport device (462) and are transported from the bypass transport device (462) to the transport device (104) at the outlet (103) of the container treatment machine (101).

8. Method according to one of claims 1 to 7, wherein the containers are treated by a further container treatment machine (110) according to the first or second operating mode before the containers are transported into the container treatment machine (101).

9. Container treatment system (100) for treating containers in the beverage processing industry, having a container treatment machine (101) operable in at least two operating modes, comprising a heater and/or a pasteurizer and/or a heat exchanger, wherein the container treatment machine comprises an inlet (102) and an outlet (103), wherein a transport device (104) is provided for discharging the containers at the outlet and wherein a sensor (106) for detecting containers treated or to be treated in the container treatment machine is provided, and wherein the container treatment machine (101) comprises a transferring device (105) movable in the direction of the transport device (104), wherein the container treatment system (100) is embodied for carrying out a method according to one of claims 1 to 8.

10. Container treatment system (101) according to claim 9, wherein the transferring device (105) is embodied as a transferring beam.

11. Container treatment system (100) according to claim 9 or 10, wherein the transferring device (105) is arranged to be movable between a starting position (252) and an end position (251) in the outlet (103).

12. Container treatment system (100) according to claim 11, wherein the transferring device (105) is in the end position (251) embodied so as to limit the transport device (104).

13. Container treatment system (100) according to one of claims 9 to 12, wherein in the inlet (102) or a transport device (121) of the container treatment system (100) leading to the inlet, a blocking device (460) for blocking and clearing the inlet for containers is provided.

14. Container treatment system (100) according to claim 13, wherein upstream of the blocking device (460), a bypass transport device (462) of the container treatment system (100) is arranged, wherein the bypass transport device (462) connects a transport section (461) for containers with the transport device (104), wherein containers may be transported from the blocking device (460) into the bypass transport device (462) if the blocking device blocks the inlet for containers.

15. Container treatment system (100) according to one of claims 9 to 14, wherein upstream of the inlet (102), a further container treatment machine (110) of the container treatment system (100) is arranged which is embodied to treat containers according to a first and/or the second operating mode of the container treatment system (100).

## Revendications

1. Procédé pour la reconversion du fonctionnement d'une installation de traitement de contenants (100) d'un premier mode de fonctionnement à un deuxième mode de fonctionnement, d'après lequel des contenants (130) sont traités pendant le premier mode de fonctionnement, dans au moins une machine de traitement de contenants (101) comprenant un réchauffeur et/ou un pasteurisateur et/ou un refroidisseur, le procédé comprenant par ailleurs le fait que tous les contenants (130) à traiter selon le premier mode de fonctionnement, sont transportés dans la machine de traitement de contenants (101), procédé d'après lequel les contenants sont traités dans la machine de traitement de contenants et transportés à la sortie (103) de la machine de traitement de contenants, d'après lequel dans la commande de l'installation de traitement de contenants (100) est mémorisée une information stipulant que va être effectuée une reconversion du fonctionnement, et d'après lequel au moins un détecteur (106) détecte les derniers contenants (130) devant être traités ou ayant été traités moyennant le premier mode de fonctionnement, et délivre un signal indicatif en ce sens, et sur la base dudit signal indicatif, un dispositif de transfert (105) transporte les contenants (130), qui ont été traités moyennant le premier mode de fonctionnement, de la sortie (103) de la machine de traitement de contenants (101) vers un dispositif de transport (104) à la sortie de la machine de traitement de contenants.

2. Procédé selon la revendication 1, d'après lequel le deuxième mode de fonctionnement définit un traitement, différent de celui du premier mode de fonctionnement, de contenants (131) dans la machine de traitement de contenants (101), et la machine de traitement de contenants est reconvertie au deuxième mode de fonctionnement après que les contenants (130) ayant été traités moyennant le premier mode de fonctionnement aient été transportés hors de la machine de traitement de contenants par le dispositif de transfert (105), et avant que des contenants (131) devant être traités moyennant le deuxième mode de fonctionnement n'aient été transportés dans la machine de traitement de contenants (101).

3. Procédé selon la revendication 1 ou la revendication 2, d'après lequel le dispositif de transfert (105), après le transport des contenants sur le dispositif de transport (104), est déplacé dans une position initiale (252) dans la zone de la sortie (103) de la machine de traitement de contenants (101), et/ou d'après lequel le dispositif de transfert (105) transporte hors de la sortie les contenants (103) ayant été traités moyennant le premier mode de fonctionnement, avant que des contenants (131), qui vont être traités moyennant le deuxième mode de fonctionnement, ne soient transportés dans la machine de traitement de contenants (101) .

4. Procédé selon la revendication 1, d'après lequel le deuxième mode de fonctionnement définit un traitement de contenants (131) sans la machine de traitement de contenants.

5. Procédé selon la revendication 4, d'après lequel le dispositif de transfert (105), après le transport des contenants vers le dispositif de transport (104), reste dans une position à la sortie (103) de la machine de traitement de contenants, et les contenants (131), qui vont être traités moyennant le deuxième mode de fonctionnement, se déplacent au niveau du dispositif de transfert le long du dispositif de transport.

6. Procédé selon la revendication 4 ou la revendication 5, d'après lequel un dispositif de blocage (460) agencé dans l'entrée (102) de la machine de traitement de contenants, bloque l'entrée, après que le dernier des contenants (130) à traiter moyennant le premier mode de fonctionnement, ait été transporté dans la machine de traitement de contenants (101), et avant qu'un contenant (131), qui doit être traité moyennant le deuxième mode de fonctionnement, ne passe le dispositif de blocage.

7. Procédé selon la revendication 6, d'après lequel les contenants (131) devant être traités moyennant le deuxième mode de fonctionnement sont déplacés par le dispositif de blocage (460) sur un dispositif de transport de contournement (462), et sont transportés par le dispositif de transport de contournement (462), sur le dispositif de transport (104) à la sortie (103) de la machine de traitement de contenants (101).

8. Procédé selon l'une des revendications 1 à 7, d'après lequel les contenants sont traités par une autre machine de traitement de contenants (110) conformément au premier ou au deuxième mode de fonctionnement, avant que les contenants ne soient transportés dans la machine de traitement de contenants (101).

9. Installation de traitement de contenants (100) pour traiter des contenants dans l'industrie de production des boissons, comportant une machine de traitement de contenants (101) pouvant fonctionner selon au moins deux modes de fonctionnement et comprenant un réchauffeur et/ou un pasteurisateur et/ou un refroidisseur, installation dans laquelle la machine de traitement de contenants comporte une entrée (102) et une sortie (103), dans laquelle il est prévu un dispositif de transport (104) pour le transport d'évacuation des contenants à la sortie et dans laquelle il est également prévu un détecteur (106) pour détecter des contenants traités ou devant être traités dans la machine de traitement de contenants, et dans laquelle la machine de traitement de contenants (101) comprend un dispositif de transfert (105) déplaçable dans la direction du dispositif de transport (104), l'installation de traitement de contenants (100) étant réalisée pour assurer la mise en oeuvre d'un procédé selon l'une des revendications 1 à 8.

10. Installation de traitement de contenants (100) selon la revendication 9, dans laquelle le dispositif de transfert (105) est réalisé sous la forme d'une barre de transfert.

11. Installation de traitement de contenants (100) selon la revendication 9 ou la revendication 10, dans laquelle le dispositif de transfert (105) est agencé de manière mobile entre une position initiale (252) et une position finale (251) dans la sortie (103).

12. Installation de traitement de contenants (100) selon la revendication 11, dans laquelle le dispositif de transfert (105) est conçu pour, dans la position finale (251), délimiter le dispositif de transport (104) .

13. Installation de traitement de contenants (100) selon l'une des revendications 9 à 12, dans laquelle il est prévu dans l'entrée (102) ou dans un dispositif de transport (121) menant à l'entrée de l'installation de traitement de contenants (100), un dispositif de blocage (460) pour bloquer ou libérer l'entrée pour des contenants.

14. Installation de traitement de contenants (100) selon la revendication 13, dans laquelle en amont du dispositif de blocage (460), est agencé un dispositif de transport de contournement (462) de l'installation de traitement de contenants (100), dans laquelle le dispositif de transport de contournement (462) relie un parcours de transport (461) pour contenants au dispositif de transport (104), et dans laquelle des contenants peuvent être transportés par le dispositif de blocage (460) dans le dispositif de transport de contournement (462), lorsque le dispositif de blocage bloque l'entrée pour les contenants.

15. Installation de traitement de contenants (101) selon l'une des revendications 9 à 14, dans laquelle en amont de l'entrée (102) est agencée une autre machine de traitement de contenants (110) de l'installation de traitement de contenants (100), ladite autre machine de traitement de contenants (110) étant conçue pour traiter des contenants conformément à un premier et/ou un deuxième mode de fonctionnement de l'installation de traitement de contenants (100).
